# EUROPEAN PATENT SPECIFICATION

(11) **EP 2 722 135 B1**
(45) Date of publication and mention of the grant of the patent: **20.12.2017**
(21) Application number: 13460068.3
(22) Date of filing: 10.10.2013
(51) Int. Cl.: B25J 5/00, B62D 55/265

(54) **Mobile platform for diagnosing metallic walls**
Mobile Plattform zur Diagnose metallischer Wände
Plate-forme mobile pour diagnostiquer des parois métalliques

(30) Priority: 19.10.2012 PL 40129012
(43) Date of publication of application: 23.04.2014
(73) Proprietor: Przemyslowy Instytut Automatyki i Pomiarow PIAP, 02-486 Warszawa (PL)
(72) Inventor: Cader, Maciej, 05-220 Zielonka (PL)

(56) References cited:
- EP-A1- 0 584 520
- GB-A- 2 153 312
- GB-A- 2 203 108
- JP-A- S56 137 150
- US-A- 3 811 320
- US-A- 4 674 949

## Description

The subject of the invention is a mobile platform for diagnosing metallic walls, moving on the walls in two mutually perpendicular directions, vertical and horizontal.

In the case of large scale-structures, such as high-capacity power boilers, silos, crude oil tanks, etc., permanent diagnostics of the walls of those tanks is of utmost importance for monitoring the wear of their internal surfaces (analysing for corrosion, cracks, thickness changes due to wear, etc.).

Industrial structures exposed to both chemical and physical factors, operated, for example, in high temperatures, are affected by corrosion, causing material loss and geometrical variations, particularly in wall thickness. A large reduction in wall thickness reduces the structure strength, which may lead to failures with unpredictable consequences. Therefore, such structures have to be periodically tested for condition. Various test methods are applied. The simplest, and the most costly, is a visual check. The surface is visually inspected, and if material loss is suspected, the area of the potential defect is cleaned, and the wall thickness is measured with known equipment.
Such measurements can be made with a device presented in European patent description no. EP 1348952.

From Polish patent description no. PL 210805, a robot for diagnosing industrial structures is known according to an invention, which was designed, in particular, to inspect material loss in such systems as pipelines, tanks, ship fuselages, boiler tubes, etc., featuring a mobile platform equipped with a base to which at least one magnetic gripper is mounted and provided with a sliding magnetic gripper, characterised in that it has a magnetic gripper connected to the base through a linear propulsion system moving perpendicularly to the base, and the sliding magnetic grippers are arranged symmetrically in relation to the magnetic gripper connected to the base on the outermost parts of linear propulsion systems, composed of linear mutually sliding components; whereby, on the outermost components of the linear propulsion systems, the rotary drives of the magnetic grippers are mounted, and the magnetic grippers are provided with a linear propulsion system for vertical movement and a linear propulsion system for lateral movement in relation to the linear movement of the system.

From Polish patent description no. PL207433 B1, a mobile robot for inspecting industrial systems is known, equipped with load bearing plate to which at least one set of magnetic grippers with solid magnets and at least one set of magnetic grippers with solid magnets are permanently attached and, in addition to this, which is provided with a control and propulsion system to control the sets of grippers and for moving the load bearing plate.
EP 0 584 520 A1 discloses a mobile platform designed for moving up the walls in two mutually perpendicular directions - vertical and horizontal. The platform comprises a superior module and a top frame, a main motor, gears and a main crawler with adhering means in form of adsorption discs arranged on each part of the crawler. The main motor is located in the rigidly attached to the superior module and is connected to the gears on the output shaft on which the wheels of the main crawler are mounted. The crawler comprises components to which the adsorption discs are flexibly attached.
GB 2 203 108 A discloses a mobile platform designed for moving up the walls comprising a crawler with electromagnets and busbars for supplying the electromagnets.

The objective of the invention is to develop a mobile platform which is free from the drawbacks of known solutions, enabling carriage of measuring equipment for diagnosing metallic walls and/or other accessories necessary to determine the condition of said walls.

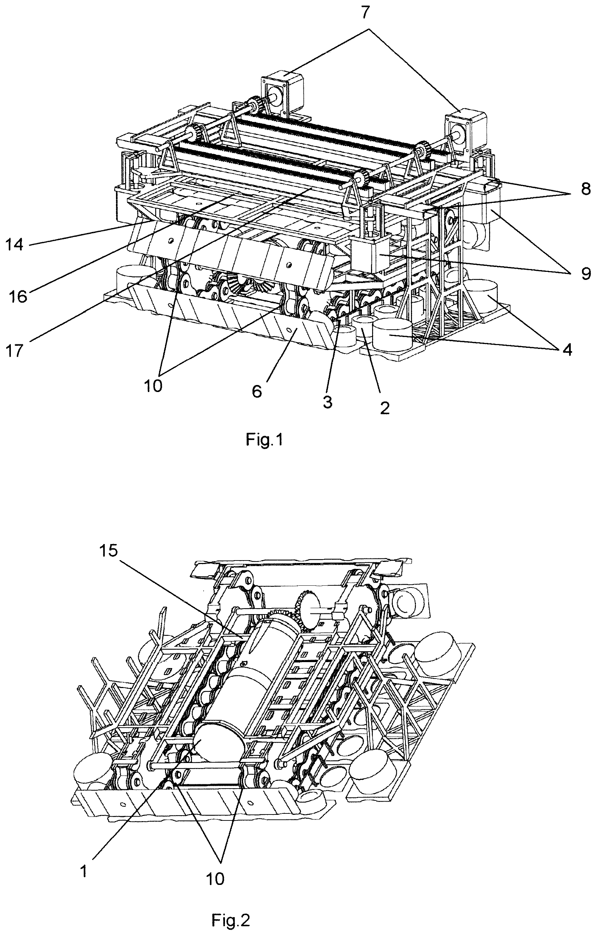

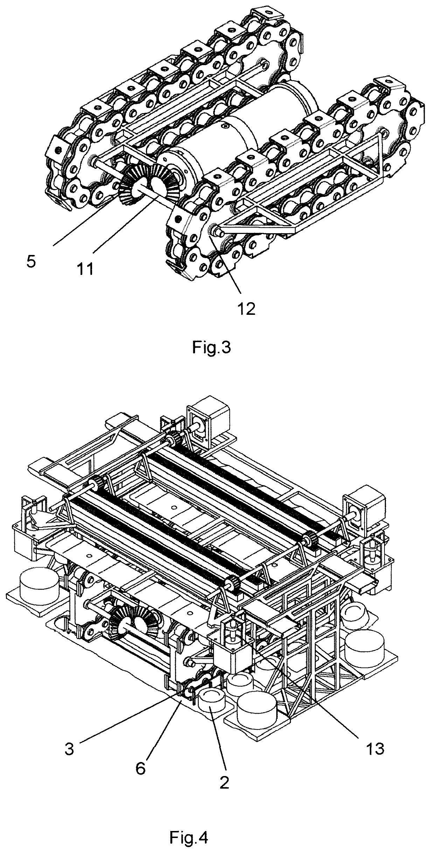

A mobile platform designed for diagnosing metallic walls, moving in two mutually perpendicular directions, vertical and horizontal, comprising a superior module and a top frame, a main motor, a gear and a main crawler with adhering means arranged on each part of the crawler, the motor being located in a basket rigidly attached to the superior module and being connected to the gear on an output shaft of which the wheels of the main crawler are mounted; the crawler comprising components to which the adhering means are flexibly attached, wherein the adhering means are in form of electromagnets supplied by a busbar and wherein the top frame module is equipped with six motors attached to the superior module with a bolted connection, the bolts being mounted on the shafts of four of the motors acting to lift and lower the top frame perpendicularly to the wall surface, while two remaining motors enable movement of the top frame parallel to the wall surface. A sample realisation of the subject of the invention is shown in a drawing in which fig. 1 shows the perspective of the mobile platform, fig. 2 shows the perspective of the mobile platform with the propulsion system, fig.3 shows the arrangement perspective of the propulsion system components and fig. 4 shows the perspective of the mobile platform with the marked bolted connection of the top frame with the superior module.

A mobile platform designed for diagnosing metallic walls, moving in two mutually perpendicular directions, vertical and horizontal, comprising the superior module 16 and top frame 17, the main motor 1, gear 5 and one main crawler 14 with electromagnets 2 arranged on each part 6 of the crawler 14 and with a busbar 3 supplying the electromagnets 2. The motor 1 is located in a basket rigidly attached to the superior module 16 and is connected to the gear 5 on the output shaft 11 on which the wheels 12 of the main crawler 14 are mounted; the said crawler comprising components 6 with flexibly attached electromagnets 3. The top frame module 17 is attached to the superior module 16 with a bolted connection 13, with the bolts mounted on motor shafts. The top frame module 17 is equipped with motors 7, 9, two 7 of which enable movement in parallel to the wall surface and the remaining four motors 9 for perpendicular movement.

The main motor 1 mounted in a cage 15 is supplied by a cable or battery pack. The motor 1 shaft is connected by means of an angle gear 5 with the main shaft 11, on which two sprockets 12 are mounted, driving a chain 10 of the crawler, composed of components 6 on which the electromagnets 2 are mounted. The main motor 1 transfers the torque on the main crawler 14 so the platform can move up and down.

To effect lateral movement, the main motor 1 of the platform is stopped, and then, using the motors 9, it is lifted with motors 7 and, using the motors 7, is moved in the direction in which the platform is to move (left or right). Afterwards, after extending the guides 8, the top frame module 17 is pressed against the wall surface. Then, the electromagnets 4 are powered, and the magnets 2 of the main crawler 14 are disconnected. In the next step, the superior module 16 is lifted and moved in the direction of the extension of guides 8. After reaching the position set, the superior module 16 is lowered, and the top frame module 17 is lifted and slid to the position shown in fig. 1. To each component 6 of the crawler 14, two electromagnets 2 are mounted on each end. The electromagnets 2 cooperate with the supply busbar 3, permanently fixed to the superior module 16. Such a mechanical solution eliminates the need for electronic control (i.e. switching on and off) of the electromagnets. The electromagnets 2 located on the components 6 of the rotating crawler 14 are powered when contacting the busbar 3. The busbar 3 is designed in such a manner that the electromagnet 2 be powered just before/after complete engagement/disengagement of the electromagnet 2. Furthermore, the electromagnets 2 are flexibly mounted on the component 6 of the crawler 14, which enables movement of the electromagnet 2 over a short distance, thus ensuring a better match to the wall surface profile, which considerably improves adhesion of the platform to the wall.

Lateral movement is possible thanks to dedicated ball guides 8 driven by two motors 7 and mounted to the top frame 17. The guides 8 are mounted with a lateral frame 18, to which, on both sides, two electromagnets 4 are flexibly mounted. During lateral movement, all four electromagnets 4 adhere to the wall surface.

## Claims

1. Mobile platform designed for diagnosing metallic walls, moving in two mutually perpendicular directions, vertical and horizontal, comprising a superior module (16), a top frame (17), a main motor (1), a gear (5) and a main crawler (14) with adhering means (2) arranged on each part (6) of the crawler (14), the motor (1) being located in a basket rigidly attached to the superior module (16) and being connected to the gear (5) on an output shaft (11) of which the wheels (12) of the main crawler (14) are mounted, the crawler (14) comprising components (6) to which the adhering means (2) are flexibly attached, **characterised in that** the adhering means are in form of electromagnets (2) supplied by a busbar (3), and **in that** the top frame (17) is equipped with six motors (7, 9) and attached to the superior module (16) with a bolted connection (13), the bolts being mounted on the shafts of four of the motors (9) acting to lift and lower the top frame (17) perpendicularly to the wall surface, while two remaining motors (7) enable movement of the top frame (17) in parallel to the wall surface.

## Patentansprüche

1. Bewegliche Plattform zur Diagnostizierung von Metallwänden, die sich beiderseitig in zwei orthogonale Richtungen bewegen kann, vertikal und horizontal, bestehend aus einem oberen Modul (16), einem Oberrahmen (17), einem Hauptmotor (1), einem Getriebe (5) und einer Hauptraupe (14) mit festhaftenden Mitteln (2), die an jedem Glied (6) der Raupe (14) angeordnet sind, mit einem Motor (1), angeordnet in einem am oberen Modul (16) starr befestigten Korb und angeschlossen an das Getriebe (5) über die Abgabewelle (11), an der die Räder (12) der Hauptraupe (14) montiert sind, mit der Raupe (14) bestehend aus Gliedern (6), an denen die festhaftenden Mittel (2) flexibel befestigt sind, **dadurch gekennzeichnet, dass** die festhaftenden Mittel die Form von Elektromagneten (2) haben, die aus einer Stromschiene (3) versorgt werden, und dass der Oberrahmen (17) mit sechs Motoren (7, 9) ausgestattet und am oberen Modul (16) mit einer Schraubverbindung (13) befestigt ist, wobei die Schraubbolzen an den Abgabewellen der vier Motoren (9) montiert sind, die den Oberrahmen (17) rechtwinklig zur Wandoberfläche anheben oder absenken, während die zwei übrigen Motoren (7) die Bewegung des Oberrahmens (17) parallel zur Wandoberfläche ermöglichen.

## Revendications

1. Plate-forme mobile conçue pour diagnostiquer des parois métalliques, se déplaçant dans deux directions mutuellement perpendiculaires, verticale et horizontale, comprenant un module supérieur (16), un châssis supérieur (17), un moteur principal (1), un engrenage (5) et une chenille principale (14) avec des moyens adhésifs (2) disposés sur chaque partie (6) de la chenille (14), le moteur (1) étant situé dans un panier fixé rigidement au module supérieur (16) et étant relié à l'engrenage (5) sur un arbre de sortie (11) sur lequel sont montées les roues (12) de la chenille principale (14), la chenille (14) comprenant des composants (6) auxquels sont fixés élastiquement les moyens adhésifs (2), **caractérisée en ce que** les moyens adhésifs sont sous forme d'électroaimants (2) alimentés par un jeu de barres (3) et **en ce que** le châssis supérieur (17) est équipé de six moteurs (7, 9), et fixé au module supérieur (16) par une liaison par boulons (13), les boulons étant montés sur des arbres de quatre des moteurs (9), agissant pour monter et descendre le châssis supérieur (17) perpendiculairement à la surface du mur, tandis que deux moteurs restants (7) permettent le déplacement du châssis supérieur (17) en parallèle à la surface du mur.
